# EUROPÄISCHE PATENTSCHRIFT

(11) **EP 1 697 182 B1**
(45) Veröffentlichungstag und Bekanntmachung des Hinweises auf die Patenterteilung: **02.12.2009**
(21) Anmeldenummer: 04803005.0
(22) Anmeldetag: 23.12.2004
(51) Int. Cl.: B60R 25/10

(54) **ÜBERWACHUNGSVORRICHTUNG ZUR ÜBERWACHUNG VON TRANSPORTIERTEN GEGENSTÄNDEN**
MONITORING DEVICE FOR MONITORING TRANSPORTED OBJECTS
DISPOSITIF DE SURVEILLANCE PERMETTANT LA SURVEILLANCE D'OBJETS TRANSPORTES

(30) Priorität: 23.12.2003 DE 10361482
(43) Veröffentlichungstag der Anmeldung: 06.09.2006
(73) Patentinhaber: Mobotix AG, 67657 Kaiserslautern (DE)
(72) Erfinder: HINKEL, Ralf, 67724 Höringen (DE)
(74) Vertreter: Pietruk, Claus Peter
(86) Internationale Anmeldenummer: PCT/DE2004/002825
(87) Internationale Veröffentlichungsnummer: WO 2005/061290

(56) Entgegenhaltungen:
- DE-A1- 19 634 562
- DE-A1- 19 940 914
- DE-A1- 19 958 549
- GB-A- 2 193 755
- GB-A- 2 239 117
- US-A- 4 897 642

## Beschreibung

Die vorliegende Erfindung betrifft die Überwachung von Gegenständen.

Die Überwachung von Gegenständen beim Transport oder in der Bewegung ist per se bekannt.

So zeigt DE 196 34 562 A1 eine Überwachungsvorrichtung für Gegenstände in Transporteinheiten mittels Mikrowellensensoren. Dabei wird die benötigte elektrische Energie durch die Batterie einer Zugmaschine bereitgestellt.

Aus der DE 199 40 914 A1 ist eine elektronische Radstoppeinrichtung u.a. für Einkaufswagen bekannt, bei der im Fall der elektronischen Aktivierung des Steuermoduls der Radreifen in der Drehbewegung blockiert. Zur Stromversorgung ist ein kleiner Dynamo an der Radnabe vorgesehen.

Aus der DE 199 58 549 ist eine Anordnung zur Warnung vor in falscher Richtung fahrenden Fahrzeugen bekannt, das eine erste Warnanlage enthält, welche einen Falschfahrer auf seinen Fehler aufmerksam machen soll und eine zweite warnanlage, die ein Gegenverkehr-Erfassungsgerät enthält und eine automatische Meldeeinrichtung, die mit einer Überwachungsstelle, z.B. einer Polizeistelle in Verbindung steht. Zur Energieversorgung ist ein solarzellengespeister Akkumulator vorgesehen.

Aus der UK 2 193 755 ist eine Zentralverschlussvorrichtung für Fahrzeuge bekannt, die elektrisch betätigt wird und welcher ein mit dem Fahrzeugschlüssel zur Notversorgung betätigbarer Dynamo zugeordnet ist.

Aus der UK 2239 117 A ist eine Diebstahlsicherung für Fahrräder bekannt, bei welcher ein akustischer Alarm ausgelöst werden kann, dessen Energiequelle von einem Dynamo aufladbar ist.

Aus der DE 196 34 562 A1 ist eine Einrichtung zur Überwachung des Innenraumes eines Transportbehältnisses, insbesondere der Ladefläche eines Nutzfahrzeuges bekannt, bei welchem an oder in einer Wand des Transportbehältnisses ein oder mehrere, auf Bewegung reagierende Mikrowellensensoren so angeordnet sind, dass die Erfassungsbereiche in dem überwachten Innenraum liegen. Alarmsignale sind über die Fahrzeugantenne absetzbar und die Energieversorgung der Sensoren wird gleichfalls überwacht.

Aus der US-PS 4 897 642 ist eine Vorrichtung zur Übertragung von Fahrzeugkennung und -position via Satellit bekannt. Es wird auf die Möglichkeit hingewiesen, einen Alarm abzusetzen.

Gerade bei empfindlichen oder wertvollen Gegenständen ist es erwünscht, diese sicher zu überwachen und somit vor z. B. Diebstahl oder Vandalismus zu schützen. Auch wenn solche Gegenstände transportiert werden, soll diese Überwachung stattfinden können. Da Gegenstände oftmals auch in Transporteinheiten wie Containern oder Güterwaggons transportiert werden, ist es wünschenswert, eine unabhängige Leistungsversorgung der Überwachung zu erreichen, um die Überwachung unabhängig von den Zugmaschinen, wie z. B. LKWs einsetzen zu können. Im Stand der Technik wird wie oben dargestellt eine solche unabhängige Leistungsversorgung z. B. über Batterien oder Solarpanels erzielt. Batterien haben den bekannten Gewichtsnachteil und sind weiterhin nur für eine bestimmte Laufzeit einsetzbar. Außerdem müssen solche Batterien und Akkus in regelmäßigen Abständen ausgetauscht und/oder aufgeladen werden. Dies erfordert einen nicht unerheblichen logistischen und Wartungsaufwand. Solarpanels sind zwar in dieser Hinsicht wesentlich einfacher zu handhaben, da sie unabhängig Strom produzieren. In diesem Fall ist die Stromversorgung der Überwachungsvorrichtung aber stark von den Tageszeiten bzw. der Witterung abhängig. Gerade bei Dunkelheit und einer optischen Überwachung kann auf Grund einer notwendigen Beleuchtung ein erhöhter Stromverbrauch stattfinden. In der Dunkelheit ist jedoch die Leistungsversorgung über Solarpanels nicht gewährleistet. Selbst wenn Energie puffernde Speicher vorgesehen werden, ist aber die Montage oftmals kritisch.

Es wäre wünschenswert, eine unabhängige Leistungsversorgung für Überwachungsvorrichtungen bereitzustellen, insbesondere zur Überwachung transportierter Gegenstände.

Die Aufgabe der Erfindung besteht nun darin, wenigstens eines der obigen Probleme zumindest teilweise einer Lösung zuzuführen.

Die Lösung dieser Aufgabe wird im unabhängigen Anspruch 1 beansprucht. Bevorzugte Ausführungsformen finden sich in den Unteransprüchen.

Damit schlägt die Erfindung zunächst eine Überwachungsvorrichtung nach Anspruch 1 vor.

Ein erster Grundgedanke der Erfindung ist somit darin zu sehen, dass und wie eine Überwachung von Gegenständen unabhängig von einem stationären Stromnetz bereitgestellt wird.

Dabei wurde erkannt, dass signifikante Vorteile erhalten werden, wenn einfach lediglich kinetische Energie in zur Überwachung benutzbare Energie umgewandelt wird und es wird zugleich eine besonders vorteilhafte Weise hierfür angegeben. So kann die Energie von Erschütterungen, Verzögerungen oder Beschleunigungen, wie sie bei Transporten im Allgemeinen auftreten, in weiter nutzbare Energie umgesetzt werden. Insbesondere können Massen in mindestens eine Richtung auslenkbar etwa pendelnd und/oder insbesondere linear federnd bzw. rotierbar gelagert werden, so dass bei einer Beschleunigung oder Verzögerung der Transporteinheit die Kraftkomponente in diese Richtung eine dementsprechende Auslenkung der Massen bewirkt. Die Massebewegung durch Auslenkung kann zum Beispiel benutzt werden, um einen Generator zu betreiben, der wiederum die zur Überwachung benutzbare Energie hervorbringt. Gerade bei schlecht gefederten Konstruktionen wie eisenbahntransportierten Güterwaggons sind so ausreichende Leistungen bereitzustellen. So wird durch Ankopplung von Bewegungsenergie an ein von der eigentlichen Fortbewegung unabhängiges Trägheits- und/oder Rotationssystem die Energieumwandlung bewirkt.

Weiter ist es möglich, dass bei Transporten auf oder unter Wasser die kinetische Energie von relativ zum Transportbehälter bewegtem Wasser benutzt wird. So kann z. B. eine Transporteinheit wie z. B. ein Schleppkahn mit einer Turbine ausgestattet werden, die die Strömungsenergie des relativ zu der Transporteinheit bewegten Wassers in Verbindung mit einem Generator in elektrische Energie umwandelt. Dies kann vorteilhaft sein, weil so zusätzliche Anschlüsse entbehrlich werden.

Da beim Transport von Gegenständen fast zwingend ein sogenannter Fahrtwind auftritt, ist insbesondere die Benutzung der kinetischen Energie der relativ zum Bewegungsenergiewandler bewegten Luft ein zuverlässiger Energielieferant. Dies ermöglicht bei geringerem Aufwand eine hohe Flexibilität der Überwachungsvorrichtung.

Dass die oben genannten Techniken zur unabhängigen Energieversorgung für andere, nicht zur Überwachung dienende Vorrichtungen wie z. B. Beleuchtung und/oder Kühlung verwendbar sind, sei erwähnt.

Weiter ist es auch möglich, mehrere der Energieversorgungsarten zu kombinieren. So kann beispielsweise die relative Bewegung der Luft und die Beschleunigung bzw. Verzögerung der Transporteinheit kombiniert werden, indem z. B. eine Luftturbine einerseits und eine oder mehrere beweglich befestigte Massen andererseits zur Energiegewinnung kombiniert werden.

Die Überwachungsvorrichtung umfasst ein elektrisch betriebenes Überwachungsmittel wie z. B. einen GPS-Empfänger oder eine Kamera und eine Leistungsversorgung, die das Überwachungsmittel mit elektrischer Leistung versorgt. Eine solche Anordnung kann einfach und robust ausgebildet werden, so dass sie kostengünstig und wenig wartungsintensiv ist.

Die Überwachungsvorrichtung umfasst ein Überwachungsmittel wie eine Kamera und/oder ein satellitengestütztes Ortungssystem; es können auch Radargeräte, Mikrophone etc. zum Einsatz kommen. Kameras werden jedoch verwendet, da diese ein gut auszuwertendes, informationsreiches Überwachungssignal liefern.

Die Art des Überwachungsmittels ist zunächst von der Erfindung nicht beschränkt; so können auch Radargeräte, Mikrofone etc. zum Einsatz kommen. Oftmals werden jedoch Kameras verwendet werden, da diese ein gut auszuwertendes, informationsreiches Überwachungssignal liefern. Außerdem sind Kameras, die zu dieser Überwachung benutzt werden können, ein Massenprodukt, das trotz hoher technischer Reife kostengünstig ist. Weiterhin kann das Überwachungsmittel ein satellitengestütztes Ortungssystem umfassen. Dies hat gerade bei transportierten Gütern den Vorteil, dass nicht nur der Zustand der Gegenstände, sondern auch ihr Ort festgestellt werden kann. Dies ist besonders beim Schutz gegen Diebstahl und ähnliches wünschenswert, um im Alarmfall ein sofortiges Eingreifen an einem zuvor nicht exakt bekannten Ort durch lokale Hilfskräfte zu ermöglichen. Da satellitengestützte Ortungssysteme seit der Einführung von GPS per se bekannt sind, ist ein solches Überwachungssystem auch relativ kostengünstig.

Bevorzugt kann den Überwachungsmitteln ein Funkübertragungsmittel zur Übertragung durch das Überwachungsmittel gewonnener Daten über eine Funkverbindung, insbesondere ein GSM-Netz, insbesondere an eine Zentraleinheit zugeordnet werden. Bei der lokalen Überwachung ist auch eine kurzreichweitige Funkverbindung wie WLAN einsetzbar.

Durch die drahtlose Übertragung der Überwachungssignale kann die eigentliche Überwachung der Gegenstände von den Gegenständen räumlich getrennt werden. Es ist dadurch möglich, mehrere Gegenstände an unterschiedlichen Orten zentral zu überwachen bzw. Gegenstände, die transportiert werden an einem stationären Ort zu überwachen.

Die Überwachungsvorrichtung umfasst bevorzugt ein Steuerungsmittel zur Steuerung der Überwachungsvorrichtung, insbesondere zur Aktivierung und/oder Deaktivierung, wobei die Steuerung, insbesondere zum Ansprechen auf Helligkeit, Schall und/oder ein Infrarotsignal ausgebildet ist. Mit anderen Worten kann die Überwachung aktiviert werden, sobald ein Schallereignis oder eine Bewegung erfasst wird. Dies spart wesentlich Energie.

Ein Steuerungsmittel zur Steuerung der Überwachungsvorrichtung ermöglicht bevorzugt nicht nur die Überwachungsvorrichtung an- und/oder auszuschalten, sondern auch den Bereich der Überwachung zu steuern. So kann die Überwachungsvorrichtung betätigt werden, sobald die Umgebungshelligkeit einen gewissen Wert überschreitet oder ein Geräusch auftritt. Dies ist über Fotosensoren oder Mikrofone zu erreichen. So kann im Fall eines Eindringens in einen Raum und der dadurch geänderten Helligkeit die Überwachungsvorrichtung betätigt werden. Ähnlich verhält es sich mit dem Schall. Auch kann das Steuerungsmittel infrarotbewegungssensitiv ausgebildet sein, so dass, wenn sich ein Infrarotsignal ändert, d. h. zum Beispiel wenn eine Person sich den überwachten Gegenständen nähert, sich die Überwachungsvorrichtung einschaltet.

Besonders bevorzugt weist die Überwachungsvorrichtung ein Steuerungsmittel mit einem Kontaktsensor auf, der insbesondere zur Erfassung des Öffnungszustandes einer Tür ausgebildet ist. Durch ein Steuerungsmittel mit einem Kontaktsensor kann erreicht werden, dass sich, sobald Öffnungen der Behälter, die die überwachten Gegenstände umgeben, aber Teile derselben sind, geöffnet werden, die Überwachungsvorrichtung an- bzw. ausschaltet und/oder zum Erfassen der Richtung gesteuert wird.

Besonders bevorzugt weist die Überwachungsvorrichtung ein Steuermittel auf, das eine Zeitschaltuhr umfasst, um zeitabhängig die Überwachungsvorrichtung zu steuern. Dies kann insbesondere im Ansprechen auf die Energieumwandlungszeit des Bewegungsenergiewandlers geschehen. Eine Zeitschaltuhr ermöglicht dabei zugleich die Überwachung von Gegenständen zu gewissen Tageszeiten oder gewissen Lieferzeiten etc. Dadurch ist es möglich, dass die Überwachungsvorrichtung nur zeitweise in Betrieb ist und sich dadurch sowohl der Energiebedarf als auch das Datenaufkommen verringert. Die Energiebedarfsverringerung ist vorteilhaft, weil so Bewegungsenergiewandler einsetzbar werden, die praktisch keinerlei Auswirkungen auf den Transport besitzen.

Weiter kann über die Zeitschaltuhr die Zeit, während welcher der Bewegungsenergiewandler Energie umgewandelt hat, gemessen werden und nach dieser Zeit die Überwachungsvorrichtung ein- und ausgeschaltet werden. So könnte z. B. bei transportierten Gütern, bei denen die kinetische Energie durch den Transport auftritt, die Transportzeit gemessen werden, dass über den Bewegungsenergiewandler und auf Grund dieser Transportzeit die Überwachungsvorrichtung gesteuert werden. Dies ist z. B. erforderlich bei Waren, die nur eine gewisse Zeit transportiert werden dürfen; erwähnt seien z. B. auch Tiertransporte.

Die durch den Bewegungsenergiewandler gewandelte Energie kann in einem Akku oder sonstigen Energiespeicher zwischengespeichert werden und erlaubt somit eine größere Unabhängigkeit von Bewegungsenergie. Dadurch kann auch in Ruhephasen eine Überwachung erfolgen.

Besonders bevorzugt weist das Steuerungsmittel einen Empfänger zum Empfangen externer Signale, insbesondere Funksignale, insbesondere aus dem GSM-Netz, zur Steuerung der Überwachungsvorrichtung im Ansprechen auf diese Signale auf.

Oft ist es auch erwünscht, z. B. neben dem automatischen Steuerungssignal, wie Helligkeit etc., extern aktiv die Überwachungsvorrichtung steuern zu können. Bei der Überwachung von Gegenständen, die transportiert bzw. nicht an ein Datenübertragungsnetz angeschlossen sind, ist es bevorzugt, dass der Empfänger Funksignale, insbesondere aus dem GSM-Netz empfangen kann. Dies ermöglicht eine weitere Unabhängigkeit und eine Überwachung der transportierten Güter von einer Zentraleinheit aus, die auch örtlich getrennt sein kann von den zu überwachenden Gütern.

Bevorzugt bilden die Leistungsversorgung und das Überwachungsmittel eine bauliche Einheit. Durch die Anordnung von Leistungsversorgung und Überwachungsmitteln als bauliche Einheit kann die Überwachungsvorrichtung einfacher benutzt und gehandhabt werden. Außerdem kann die Stromversorgung solcher Überwachungsvorrichtungen bereits mit extrem geringem Montageaufwand sichergestellt werden. Bevorzugt kann damit das Überwachungsmittel und die Leistungsversorgung in ein Gehäuse gekapselt werden und hat damit eine höhere Resistenz gegen mechanische und/oder andere Einflüsse, etwa durch Flüssigkeit oder Chemikalien.

In einer besonderen Ausführung ist die Überwachungsvorrichtung an den Wänden, insbesondere an den Vertikalwänden, insbesondere an den Seitenwänden einer Transporteinheit, insbesondere eines Containers und/oder Güterwaggons angebracht. Dies ist vorteilhaft, weil bei diesen oftmals eine separate Stromversorgung unmöglich oder zu aufwendig ist, vor allem bei häufigen Umsetzen. Auf die Möglichkeit, Energie aus der an Güterwaggons vorgesehenen Versorgung mit Pressluft zu erhalten, indem mit dieser Pressluft ein bewegungsenergiewandelndes Windrad bewegt wird, sei nur offenbarungshalber hingewiesen.

Durch die Montage an den Seitenwänden einer Transporteinheit kann der Fahrtwind während des Transports zur Energiegewinnung ausgenutzt werden. Dazu kann z. B. ein Windrad bzw. eine Turbine vorhanden sein, um eine allgemein linear vorbeistreichende Bewegung des Fahrtwindes in eine Drehbewegung einer Welle umzuwandeln, wodurch ein an die Welle gekoppelter Dynamo elektrische Energie bereitstellen kann. Die Montage an den Wänden erlaubt es, auf eine eigene Trägervorrichtung zu verzichten und die Überwachungsvorrichtung direkt mit der Transporteinheit zu verbinden. Die Montage an den Vertikalwänden erlaubt es, die Container bzw. Transporteinheiten zu stapeln, ohne dass die Überwachungsvorrichtung Schaden nimmt. Die Montage an den Seitenwänden erlaubt es zugleich, den Seitenwind an dem Container oder dergleichen vorbei auszunutzen, ohne eventuell vom Windschatten der Zugmaschine oder eines anderen Containers, der Lokomotive oder dergleichen beeinträchtigt zu sein. Trotz Anbringung an den Seitenwänden ist es hier dem Fachmann überraschend, dass ungeachtet der durch Grenzschichtphänomene reduzierten Strömungsgeschwindigkeit an den Wänden noch genug kinetische Energie vorhanden ist, um die Überwachungsvorrichtung zu betreiben. Alternativ können über Durchtrittsöffnungen in Containerwänden oder dergleichen Luftströmungen gegebenenfalls gerichtet ins Innere geführt werden, um dort einen Bewegungsenergiewandler anzutreiben. In einer besonderen Ausführung weist der Bewegungsenergiewandler ein Bewegungsenergieerfassungsmittel auf zur Erfassung der kinetischen Energie, wobei dieses Bewegungsenergieerfassungsmittel zumindest teilweise außerhalb der Transporteinheit angeordnet ist.

Gerade bei Überwachungsvorrichtungen, die kinetische Energie von außerhalb der Transporteinheit benutzen, ist es vorteilhaft, diese an der Außenseite zu erfassen. Dabei kann eine rotierende Welle durch eine Öffnung in den Wänden der Transporteinheit ins Innere der Transporteinheit geführt werden. Dort kann die Rotationsenergie der Welle mittels eines Generators in elektrische Energie umgewandelt werden. Wenn dieser im Inneren der Transporteinheit angeordnet ist, ist er schon durch die Transporteinheit vor mechanischen und Witterungseinflüssen, aber auch vor unbefugter Demontage gut geschützt. Die Anordnung des Bewegungsenergieerfassungsmittels außerhalb der Transporteinheit bei Montage des restlichen Bewegungsenergiewandlers innerhalb der Transporteinheit erlaubt einen signifikant erhöhten Schutz vor mechanischen und Witterungseinflüssen.

In einer besonderen Ausführung der Überwachungsvorrichtung ist das Überwachungsmittel in das Innere der Transporteinheit zeigend angeordnet. Bei Überwachungsmitteln, die einen gerichteten Überwachungsbereich aufweisen, wie Kameras, ist es gerade bei der Überwachung von Gegenständen in Transporteinheiten angebracht, die Überwachungsmittel in das Innere der Transporteinheit zeigend anzuordnen. Dabei kann das Überwachungsmittel so angeordnet werden, dass ein maximaler Bereich der Transporteinheit überwacht wird. Auch kann es manchmal angebracht sein, nur einen Teil der Transporteinheit zu überwachen und so eine höhere Genauigkeit bzw. Auflösung zu erlangen. Dass automatische und/oder gesteuerte Bildveränderungen, etwa bezüglich Zoomeinstellungen, Bildwiederholfrequenz etc. möglich sind, sei erwähnt.

In einer besonderen Ausführung der Überwachungsvorrichtung ist der Bewegungsenergiewandler zur Umwandlung kinetischer Energie relativ zum Bewegungsenergiewandler bewegter Luft in elektrische Energie ausgebildet, insbesondere als Luftturbinensystem. Luft kann auch durch Kanäle an diese geführt werden, insbesondere durch ins Containerinnere geführte Kanäle.

Die Erfindung wird im Folgenden nur beispielsweise anhand der nachfolgenden Beschreibung unter Bezug auf die Zeichnungen erläutert. In diesen zeigen:
- Fig. 1: eine Transporteinheit mit der erfindungsgemäßen Überwachungsvorrichtung von außen,
- Fig. 2: die Transporteinheit von innen.

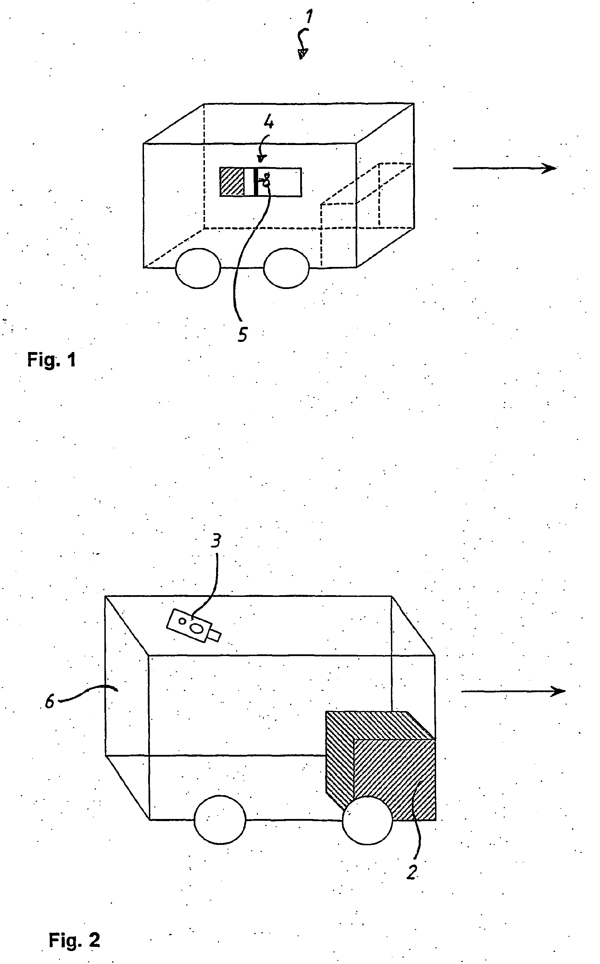

Nach Figur 1 umfasst eine allgemein mit 1 bezeichnete Überwachungsvorrichtung 1 zur Überwachung von Gegenständen 2 (Fig. 2) ein Überwachungsmittel 3 zur Gegenstandsüberwachung und eine zugeordnete elektrische Leistungsversorgung 4, die ihrerseits einen Bewegungsenergiewandler 5 zur Wandlung kinetischer in elektrische Energie umfasst.

Die Überwachungsvorrichtung 1 ist im vorliegenden Fall zur Überwachung des Innenraums von Containern 6 und den darin angeordneten Gegenständen 2 sowie zur Übertragung von Alarm- oder Überwachungssignalen an eine zentrale Einheit (nicht gezeigt) über eine drahtlose Verbindung, insbesondere per Funk durch das GSM-Netzwerk oder andere Funktelefon-Netzwerke ausgebildet.

Bei den Gegenständen 2 kann es sich um in Containern Angeordnetes, Empfindliches oder Wertvolles handeln, beispielsweise lebend transportiertes Vieh oder teure PKWs.

Das Überwachungsmittel 3 ist im vorliegenden Beispiel eine bildgebende Kamera, die den relevanten Innenbereich des Containers 6 und insbesondere die darin angeordneten Gegenstände 2 erfasst. Weiter sind vorgesehen am Überwachungsmittel 3 Infrarot- und Kontaktsensoren (nicht gezeigt), um beim öffnen des Containers oder Bewegungen im Inneren eine Aktivierung zu ermöglichen.

Die Überwachungsvorrichtung 1 weist nun zur Versorgung des Überwachungsmittels 3 und der zugeordneten Überwachungssignalübertragungsschaltkreise die Leistungsversorgung 4 auf, die neben anderen Elementen einen Bewegungsenergiewandler in Form eines bei Transport des Containers 6 durch den an diesem vorbeistreichenden Fahrtwind getriebenen Windrades 5 bzw. einer Turbine umfasst, deren vom Fahrtwind in Rotationsbewegung versetzte Drehwelle an einen elektrischen Generator 5b gekoppelt ist. Das Windrad 5 ist dabei dicht an der Containerwand im Außenbereich angeordnet, während die Überwachungsvorrichtung 6 mit weiteren Elementen, insbesondere dem Generator und der Kamera im Inneren des Containers, anzuordnen ist. Wie bevorzugt möglich und dargestellt, bilden der Bewegungsenergiewandler 5 und die Überwachungsmittel 3 eine bauliche Einheit.

Die elektrische Leistungsversorgung kann, wie nur schematisch angedeutet, weitere Elemente umfassen, insbesondere einen puffernden Zwischenspeicher zur Speicherung von aus der Bewegungsenergie des Fahrtwindes im Generator erzeugte elektrische Energie für Standphasen des Containers bereitzustellen, eine Steuerung, um ein periodisches Inbetriebnehmen zu ermöglichen usw.

Die Vorrichtung wird verwendet wie folgt:
Zunächst wird in einer Wand eines mit der Überwachungsvorrichtung 1 zu versehenden Containers eine Durchtrittsöffnung vorgesehen und die Überwachungsvorrichtung mit dem nach außen weisenden Windrad daran so befestigt, dass die Kamera ins Containerinnere und auf den Bereich blickend angeordnet ist, in welchem später die zu überwachenden Gegenstände verbracht werden sollen.

Nun wird der Container beladen und in Bewegung gesetzt. Durch den an der Containerwand vorbeistreichenden Fahrtwind wird das Windrad in Bewegung versetzt und treibt über die durch die Gehäusewand tretende, sich nunmehr drehende Welle den Generator des Bewegungsenergiewandlers an. Die so erzeugte elektrische Energie wird teilweise unmittelbar verwendet, um die Überwachungsvorrichtung zu betreiben und periodisch überwachungsindikative Signale, insbesondere Bilder, über das Funknetz abzusetzen und teilweise um den elektrischen Pufferspeicher für Stillstandsphasen zu laden.

In Stillstandsphasen kann die Überwachungsvorrichtung 1 dann aus dem durch die Bewegungsenergiewandler aufgeladenen elektrischen Pufferspeicher, insbesondere Akkumulatoren, betrieben werden und gewährleistet so auch während Stillstandsphasen eine hohe Überwachungssicherheit.

Es sei darauf hingewiesen, dass anstelle einer GSM-Funknetzüberwachung auch andere Möglichkeiten bestehen, insbesondere, in langen Zügen etwa, die Möglichkeit einer WLAN-Verbindung USW.

## Patentansprüche

1. Überwachungsvorrichtung zur Überwachung von transportierten Gegenständen, aufweisend
ein Überwachungsmittel zur Gegenstandsüberwachung und eine dem Überwachungsmittel zugeordnete elektrische Leistungsversorgung,
wobei
die Leistungsversorgung
einen Bewegungsenergiewandler zur Wandlung
kinetischer fahrtbedingter Energie
in elektrische Energie
umfasst,
um das Überwachungsmittel mit Energie zu versorgen, und das Überwachungsmittel eine Kamera und/oder ein satellitengestütztes Ortungssystem umfasst.

2. Überwachungsvorrichtung nach einem der vorhergehenden Ansprüche, **dadurch gekennzeichnet, dass** dem Überwachungsmittel ein Funkübertragungsmittel zur Übertragung durch das Überwachungsmittel gewonnener Daten über eine Funkverbindung, insbesondere ein GSM-Netz, insbesondere an eine zentrale Einheit zugeordnet ist.

3. Überwachungsvorrichtung nach einem der vorhergehenden Ansprüche, **dadurch gekennzeichnet, dass** die Überwachungsvorrichtung ein Steuerungsmittel zur Steuerung der Überwachungsvorrichtung insbesondere zur Aktivierung und/oder Deaktivierung aufweist, wobei die Steuerung insbesondere zum Ansprechen auf Helligkeit, Schall und/oder ein Infrarotsignal ausgebildet ist.

4. Überwachungsvorrichtung nach einem der vorhergehenden Ansprüche, **dadurch gekennzeichnet, dass** das Steuerungsmittel einen Kontaktsensor aufweist, der insbesondere zur Erfassung des Öffnungszustandes einer Tür ausgebildet ist.

5. Überwachungsvorrichtung nach einem der vorhergehenden Ansprüche, **dadurch gekennzeichnet, dass** das Steuerungsmittel eine Zeitschaltuhr umfasst, zur zeitabhängigen Steuerung der Überwachungsvorrichtung, insbesondere im Ansprechen auf die Energieumwandlungszeit des Bewegungsenergiewandlers.

6. Überwachungsvorrichtung nach einem der vorhergehenden Ansprüche, **dadurch gekennzeichnet, dass** das Steuerungsmittel einen Empfänger zum Empfangen externer Signale insbesondere Funksignale, insbesondere aus dem GSM-Netz umfasst, zur Steuerung der Überwachungsvorrichtung in Ansprechen auf dieses Signal.

7. Überwachungsvorrichtung nach einem der vorhergehenden Ansprüche, **dadurch gekennzeichnet, dass** die Leistungsversorgung und das Überwachungsmittel eine bauliche Einheit sind.

8. Überwachungsvorrichtung nach einem der vorhergehenden Ansprüche, **dadurch gekennzeichnet, dass** die Überwachungsvorrichtung zur Anordnung an den Wänden, insbesondere an den Vertikalwänden , insbesondere an Seitenwänden einer Transporteinheit, insbesondere eines Containers und/oder Güterwaggons ausgebildet ist.

9. Überwachungsvorrichtung nach einem der vorhergehenden Ansprüche, **dadurch gekennzeichnet, dass** der Bewegungsenergiewandler ein Bewegungsenergieerfassungsmittel aufweist zur Erfassung der kinetischen Energie und das Bewegungsenergieerfassungsmittel zumindest teilweise außerhalb der Transporteinheit angeordnet ist.

10. Überwachungsvorrichtung nach einem der vorhergehenden Ansprüche, **dadurch gekennzeichnet, dass** das Überwachungsmittel dazu ausgebildet ist, in das Innere der Transporteinheit zeigend angeordnet zu sein.

11. Überwachungsvorrichtung nach einem der vorhergehenden Ansprüche, **dadurch gekennzeichnet, dass** der Bewegungsenergiewandler zur Umwandlung kinetischer Energie relativ zum Bewegungsenergiewandler bewegter Luft in elektrische Energie ausgebildet, insbesondere als Luftturbinensystem ausgebildet ist.

## Claims

1. Monitoring device for monitoring transported objects, having a monitoring means for object monitoring, and an electric power supply unit assigned to the monitoring means, the power supply unit comprising a kinetic energy converter for converting kinetic travel-generated energy into electrical energy in order to supply the monitoring means with energy, and the monitoring means comprising a camera and/or a satellite-based positioning system.

2. Monitoring device according to one of the preceding claims, **characterized in that** the monitoring means is assigned a radio transmitting means for transmitting data obtained by the monitoring means via a radio link, in particular a GSM network, in particular to a central unit.

3. Monitoring device according to one of the preceding claims, **characterized in that** the monitoring device has a control means for controlling the monitoring device, in particular for the purpose of activation and/or deactivation, the control being designed, in particular, to respond to brightness, sound and/or an infrared signal.

4. Monitoring device according to one of the preceding claims, **characterized in that** the control means has a contact sensor which is designed, in particular, to detect the opening state of a door.

5. Monitoring device according to one of the preceding claims, **characterized in that** the control means comprises a time switch for the time-dependent control of the monitoring device, in particular in response to the energy conversion time of the kinetic energy converter.

6. Monitoring device according to one of the preceding claims, **characterized in that** the control means comprises a receiver for receiving external signals, in particular radio signals, in particular from the GSM network, in order to control the monitoring device in response to this signal.

7. Monitoring device according to one of the preceding claims, **characterized in that** the power supply unit and the monitoring means are a structural unit.

8. Monitoring device according to one of the preceding claims, **characterized in that** the monitoring device is designed to be arranged on the walls, in particular on the vertical walls, in particular on side walls of a transport unit, in particular of a container and/or goods wagon.

9. Monitoring device according to one of the preceding claims, **characterized in that** the kinetic energy converter has a kinetic energy detection means for detecting the kinetic energy, and the kinetic energy detection means is arranged at least partially outside the transport unit.

10. Monitoring device according to one of the preceding claims, **characterized in that** the monitoring means is designed to be arranged pointing into the interior of the transport unit.

11. Monitoring device according to one of the preceding claims, **characterized in that** the kinetic energy converter is designed to convert kinetic energy of air relative to the kinetic energy converter into electrical energy, in particular designed as an air turbine system.

## Revendications

1. Dispositif de surveillance destiné à surveiller des objets transportés et présentant :
un moyen de surveillance destiné à la surveillance des objets et une alimentation en énergie électrique associée au moyen de surveillance,
l'alimentation en énergie comprenant un convertisseur d'énergie de déplacement qui convertit en énergie électrique l'énergie cinétique associée au déplacement pour alimenter le moyen de surveillance en énergie,
le moyen de surveillance comprenant une caméra et/ou un système de localisation assisté par satellite.

2. Dispositif de surveillance selon l'une des revendications précédentes, **caractérisé en ce qu'**un moyen de transmission par radio destiné à transmettre par une liaison radio, en particulier par le réseau GSM, en particulier avec une unité centrale, les données saisies par le moyen de surveillance, est associé au moyen de surveillance.

3. Dispositif de surveillance selon l'une des revendications précédentes, **caractérisé en ce que** le dispositif de surveillance présente un moyen de commande qui commande le dispositif de surveillance, en particulier pour l'activer et/ou le désactiver, la commande étant configurée pour répondre en particulier à la luminosité, au son et/ou à un signal infrarouge.

4. Dispositif de surveillance selon l'une des revendications précédentes, **caractérisé en ce que** le moyen de commande présente un détecteur de contact qui est configuré en particulier pour détecter l'état d'ouverture d'une porte.

5. Dispositif de surveillance selon l'une des revendications précédentes, **caractérisé en ce que** le moyen de commande comprend une horloge de commutation temporelle qui commande le dispositif de surveillance en fonction du temps, en particulier en réponse à la durée de conversion d'énergie du convertisseur d'énergie de déplacement.

6. Dispositif de surveillance selon l'une des revendications précédentes, **caractérisé en ce que** le moyen de commande comprend un récepteur qui reçoit les signaux externes, en particulier les signaux radio, en particulier par le réseau GSM, pour commander le dispositif de surveillance en réponse à ce signal.

7. Dispositif de surveillance selon l'une des revendications précédentes, **caractérisé en ce que** l'alimentation en énergie et le moyen de surveillance forment une entité.

8. Dispositif de surveillance selon l'une des revendications précédentes, **caractérisé en ce que** le dispositif de surveillance est configuré pour être placé sur les parois, en particulier les parois verticales et notamment les parois latérales d'une unité de transport, notamment d'un conteneur et/ou d'un wagon de marchandises.

9. Dispositif de surveillance selon l'une des revendications précédentes, **caractérisé en ce que** le convertisseur d'énergie de déplacement présente un moyen de captage de l'énergie du déplacement qui capte l'énergie cinétique, le moyen de captage de l'énergie de déplacement étant disposé au moins en partie à l'extérieur de l'unité de transport.

10. Dispositif de surveillance selon l'une des revendications précédentes, **caractérisé en ce que** le moyen de surveillance est configuré pour être disposé de manière à être orienté vers l'intérieur de l'unité de transport.

11. Dispositif de surveillance selon l'une des revendications précédentes, **caractérisé en ce que** le convertisseur d'énergie de déplacement est configuré en particulier comme système de turbine à air qui convertit en énergie électrique l'énergie cinétique de l'air déplacé par rapport au convertisseur d'énergie de déplacement.
